# EUROPEAN PATENT SPECIFICATION

(11) **EP 3 273 637 B1**
(45) Date of publication and mention of the grant of the patent: **10.06.2020**
(21) Application number: 17153704.6
(22) Date of filing: 30.01.2017
(51) Int. Cl.: H04L 12/24, H04W 24/02, H04W 24/08

(54) **MOBILE MANAGEMENT SYSTEM AND METHOD FOR MANAGING A LOCAL AREA NETWORK**
MOBILES VERWALTUNGSSYSTEM UND VERFAHREN ZUR VERWALTUNG EINES LOKALEN NETZWERKS
SYSTÈME MOBILE DE GESTION ET PROCÉDÉ DE GESTION D'UN RÉSEAU LOCAL

(30) Priority: 18.07.2016 TW 105122600
(43) Date of publication of application: 24.01.2018
(73) Proprietor: Arcadyan Technology Corporation, Hsinchu City 30071 (TW)
(72) Inventor: HUANG, Shao-Jung, Hsinchu City 30071 (TW); LIU, Fa Chiang, Hsinchu City 30071 (TW); WENG, Yu-Chen, Hsinchu City 30071 (TW); LEE, Chih-Fang, Tainan City 717 (TW); CHEN, Chien-Lin, Taipei City 11491 (TW)
(74) Representative: Viering, Jentschura & Partner mbB Patent- und Rechtsanwälte

(56) References cited:
- US-A1- 2008 130 562
- US-A1- 2008 189 420
- US-A1- 2014 047 056

## Description

### BACKGROUND OF THE INVENTION

### 1. Field of the Invention

The present invention is related to a management system and method of a local area network, in particular to a system and method adapted to a mobile device for managing the local area network through a graphical interface, and a computer-readable storage device.

### 2. Description of Related Art

In a conventional technology of network management, a network administrator utilizes a management interface, e.g. a webpage or a command line, to control the whole network system. Through the conventional interface, the administrator can access and manage a specific node in a LAN. A network management application allows the administrator to gain the packet information from each node or over a network route. The information then renders a series of statistic data for network management.

The various conventional network management tools have been developed for years, and are software usually executed in a desktop computer, a laptop computer. However, the conventional technologies generally rely on expertise and ordinary people cannot easily use the management tools.

US 2008/189420 A1 discloses a method and a system for mobilizing a management service platform, by launching a mobile management interface (MMI) on a mobile unit (MU) and generating management instructions via the MMI of the MU serving as the management device and managing other MUs in the network.

US 2008/130562 A1 discloses controlling the electrical devices within a wireless mesh network, by using a static controller with the latest network topology update and a portable node enabled to include/exclude nodes in the network on behalf of the static controller.

### SUMMARY OF THE INVENTION

The present invention defines a method according to claim 1 and a system according to claim 12. Further embodiments are set forth in the dependent claims 2-11 and 13.

### BRIEF DESCRIPTION OF THE DRAWINGS

Fig. 1 shows a schematic diagram depicting a framework of a local area network applying the mobile management system and method for the local area network in accordance with the present invention;
Fig. 2 shows another diagram depicting another framework of the local area network applying the mobile management system and method of the present invention;
Fig. 3 shows a flow chart describing a process of configuring a master access point in one embodiment of the present invention;
Fig. 4 shows a schematic diagram depicting a mobile management system in one embodiment of the present invention;
Fig. 5 shows a schematic diagram depicting a network topology displayed in a mobile device in one embodiment of the present invention;
Fig. 6 shows a schematic diagram depicting a network topology in one further embodiment of the present invention;
Fig. 7 schematically shows a user using a gesture to operate the management method through an interface in one embodiment of the present invention;
Fig. 8 schematically shows a management interface according to one embodiment of the present invention;
Fig. 9 shows a flow chart describing a process of the method for managing the local area network in one embodiment of the present invention;
Fig. 10 shows one more flow chart describing a process of the method for managing the local area network in one embodiment of the present invention;
Fig. 11 shows another flow chart describing a process of the method for managing the local area network in one embodiment of the present invention.

### DETAILED DESCRIPTION OF THE PREFERRED EMBODIMENTS

The present disclosure now will be described more fully hereinafter with reference to the accompanying drawings. The below mentioned embodiments are meant to be examples useful for understanding the invention, which is only defined by the appended claims.

The disclosure is directed to a mobile management system and method for managing a local area network. One of the approaches of the system is utilizing a mobile device to manage operations of a network, e.g. a LAN, using a software program. The software program is performed to acknowledge a topology of the local area network according to information provided by a master access point. The software program is able to render a graphical topology map based on the topology. The software program initiates a graphical management interface that allows the user to operate the network management using his gesture. The topology map is to show the connectivity of the one or more access points and/or one or more terminal devices within the local area network according to the type of the network topology. It is noted that the network topology adapted to the system is not limited to any type of topology. The management program renders the graphic topology map corresponding to the type of topology of the LAN, and the type of the network topology is any or a combination of a point-to-point topology, a bus topology, as star topology, a ring topology, a mesh topology, a tree topology, a hybrid topology, a Daisy Chain topology, and a linear topology.

Within a LAN including one or more access points, a master access point can be decided among a plurality of access points under a specific network topology. The following embodiments describe the method for defining the master access point.

The mobile device operating the management mechanism of the present invention obtains a fixed IP address or DHCP-served IP address and a privilege for accessing the local area network. The management program executed in the mobile device acquires information related to the master access from its connected access point. The information related to the master access point is such as an IP address of the master access point, a MAC address, or a hostname that allows the management program to access the master access point and acquire the information of the local area network. The management program therefore obtains a topology of the LAN. The topology can be depicted by a graphical topology map that is shown in the mobile device.

The topology map can be visualized by a graphical interface. In addition to the type of topology, the management program refers to a path distance between the nodes in the LAN. The path distance between the nodes can be determined according to latency of the broadcast packets. This data can be collected by the master access point.

The management program can be used to optimize the topology map. For example, a longest path distance among the nodes can be first obtained, and this path can be modified to meet a display resolution and a display range of the mobile device. When the topology is displayed, the other paths among the nodes can be proportionally modified according the modified longest path so as to optimize the topology map in the mobile device.

The content displayed in the mobile device includes connectivity of the access point(s) or the terminal device(s) within the LAN. The content also includes any ID for every access point. For example, a SSID (service set identifier), a secure key, a channel, and/or the connected devices. The management program computes the status of the devices connected to the access point according to the information related to the access point(s) within the LAN. The information related to the access point is such as a number of the connected devices, a distance, and/or address, by which the program can acquire the network port for the connections.

The management program therefore inspects the bit rate(s) among the nodes, e.g. among the access points. The colors, brightness of lamps/LEDs, and icons can be used to indicate the information such as the connection interface, connection status, and signal strength. Further, the network status for each access point can be shown by colors or brightness of lamps for indicating the health, e.g. normal, abnormal or broken connection, of the device.

According to the embodiment for acknowledging the master access point in the LAN, the user through the software program confirms that there is one access point served to allocate IP addresses for the connected access point, and the access point in charge of allocating IP addresses is configured to be the master access point of the local area network. The service for allocating the IP addresses is such as a DHCP service. The master access point is configured to manage the access points within the LAN.

Under this framework, the plurality of access points in the LAN render a mechanism to automatically designate the master access point when the topology is changed. The mechanism for deciding the master access point acts as a management protocol operated among the access points in the LAN. When the topology of the local area network is changed, for example the original master access point is substituted or cancelled, every access point within the local area network re-confirms if any access point is served to allocate IP addresses, so as to re-configure the master access point, and the re-configured master access point again receives operating information of every access point, and renders an updated network topology to the management program. The access point which runs the DHCP or TR-069 service can be designated to be the master access point. Still further, the plurality of access points communicate with each other, including exchanging hardware information among the access points, and rule that a master access point is defined.

It is noted that the hardware is such as any one or a combination of MAC address, system uptime, neighbor list, power of processor, and capability of network transmission. The hardware information, e.g. the serial number, computation and load capacity, is referred to in order to decide the master access point.

The method and system in accordance with the present invention are primarily adapted to a LAN including access points, including a wireless local area network (WLAN). The access point may act as a hot spot, a network sharing machine, a router, or a gateway that serves as a node allowing the terminal device to connect to other domains. The master access point acts as an administrator of the LAN for collecting operating status of the access points in the LAN anytime, and efficiently managing the operations of LAN. For example, the master access point administrates the access points that commonly share the network work when the performance of the LAN declines due to the crowded network, so as to achieve the purpose of load balance and redundancy. In another embodiment of the present invention, the management mechanism allows the terminal devices within a WLAN to perform a hand-off process among the access points.

The local area network is such as a home network, a company intranet, or a specific place that is disposed with a plurality of access points. When a plurality of access points are provided, the master access point is informed according to a management protocol since the access points acknowledge any change of topology occurs in the LAN. It is noted that a broken connection, replacement of an access point, adding or deleting any access point will change the topology of the LAN. After that, the master access point administrates launching a redundancy process, adjusting the packet transmitting path, or changing the channel.

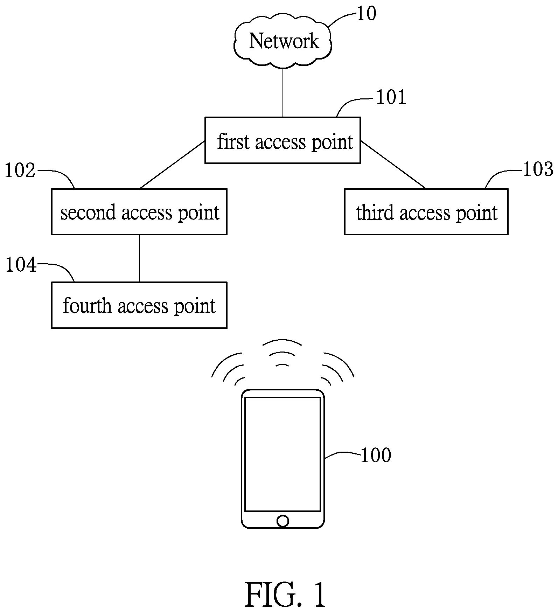

Fig. 1 shows a schematic diagram describing a local area network. A first access point 101 bridges the LAN and an external network 10. Other access points in the LAN schematically indicate a second access point 102, a third access point 103, and a fourth access point 104. The combination of access points serves the various terminal devices in the LAN. A client device 100 connects to one of access points via a wireless network. Because the fourth access point 104 is the closest one near the client device 100, the client device 100 preferably connects to the fourth access point 104 in the early phase. The mobile management method for managing the LAN can be operated in the client device 100 that runs a management program.

The first access point 101, the second access point 102, the third access point 103, and the fourth access point 104 are communicated with each other over a wired or wireless connection. They can exchange information under a management protocol. The management protocol allows the access points to deliver their operating information to the master access point. The network status of every access point can be reported to the master access point. The master access point is able to acknowledge overall operating information of the whole network, including the change of topology.

The access point may act as a gateway, a router of the LAN, a DSLAM (Digital Subscriber Line Access Multiplexer) provided for access Internet via a telephone line, or a hot spot.

Under the topology management mechanism for the LAN, the related access point implements the management protocol using software, firmware, e.g. program in an IC, or a circuit system. The management mechanism allows the access points to exchange packet information, confirm one access point served to allocate IP addresses, designating the access point allocating the IP address as a master access point for the LAN, recording the IP address of the master access point in the LAN, and transmitting operating information to the master access point under the management protocol. The master access point can serve as a DHCP server.

It is noted that the LAN of the present invention is not limited to any type of topology. In the schematic diagram, a master access point is in a LAN. The mobile management system is able to receive the operating information from the master access point.

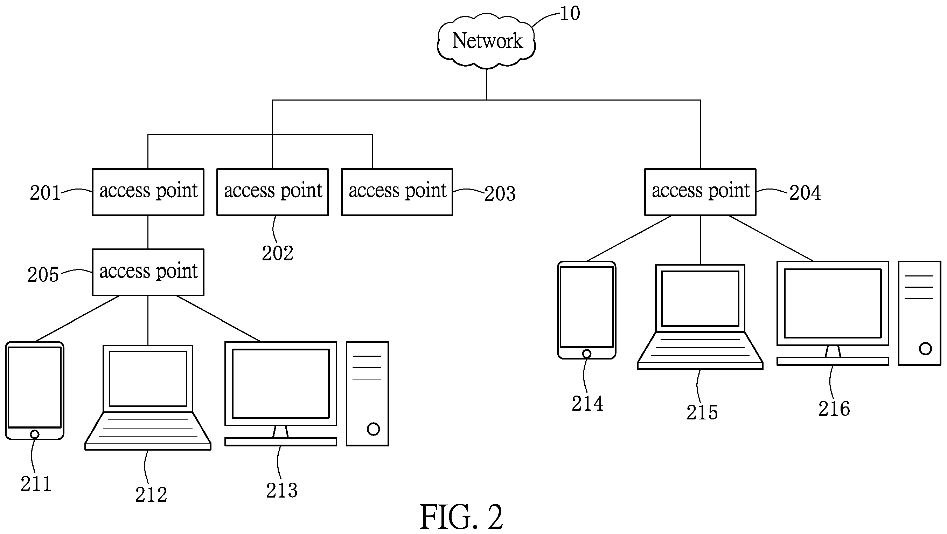

Reference is next made to Fig. 2 depicting a network framework. The shown LAN is separated into two regions. The access points 201, 202, 203, and 205 form a group. The plurality of access points is provided for a place which requires more complete signaling coverage, or to meet a special requirement. The access points 201, 202, 203 and 205 are able to serve the multiple client devices 211, 212, and 213 for accessing the external network 10. At another region, only access point 204 is used to serve the client devices 214, 215, and 216.

Similarly, the mobile management method for managing the LAN with a specific topology in accordance with the present invention network, in addition to designating a master access point for providing the DHCP service for the client devices, manages the operations of the access points 201, 202, 203, 204, and 205. The mobile management method allows the mobile device to connect with one of the access points, and then acquire information relating to the master access point. The method further obtains the operating information of the whole LAN from the master access point.

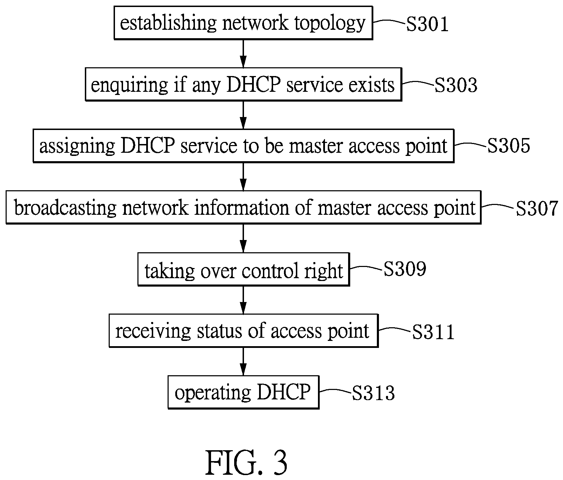

Fig. 3 shows a flow chart depicting a process of designating a master access point and its operation according to one embodiment of the present invention. The access points within the LAN support a specific management protocol that is implemented in the access points by software, firmware or circuits. The operation of the management can be implemented by a software program or by circuits. Through the management protocol, the access points exchange their package information with others, confirm if any access point is in charge of allocating network addresses, designating the access point allocating the network addresses as a master access point, recording network address of the master access point, and transmitting operating information to the master access point.

The master access point becomes one of the sources providing the information of the LAN. Fig. 3 shows a process of obtaining the master access point in one embodiment of the present invention. In the beginning, such as step S301, a network topology is established in a local area network. A plurality of access points exchange their packet information. The broadcast packets reflect the whole LAN's situation. In the LAN, such as step S303, the access points inspect if any access point runs a DHCP service by the broadcast packets. The broadcast packets are produced when every access point establishes a connection with other access point(s), and the packets are used to inspect the neighboring network nodes. The broadcast packets include the request packets which are broadcast for asking for network address allocation from DHCP service or BOOTP service.

Next, such as step S305, it is determined whether a DHCP service within the LAN is found through the response packets responding to the DHCP request packets. The access point broadcasts packets requesting for its network address. The access point which responds to the request and allocates a network address is designated as the master access point. After that, the master access point starts broadcasting information to the access point(s), such as informing network information, e.g. the IP address of the master access point, to the access point(s), such as step S307. Thus, every access point transmits its operating information to the master access point through the management protocol, and the master access point receives the operating information while it acts as a server used to allocate the IP addresses.

When the master access point is affirmed, such as step S309, the master access point gains the authority to control the whole LAN and the other access points. In step S311, the master access point receives the operating information transmitted by the other access point(s). In step S313, the master access point runs its DHCP service.

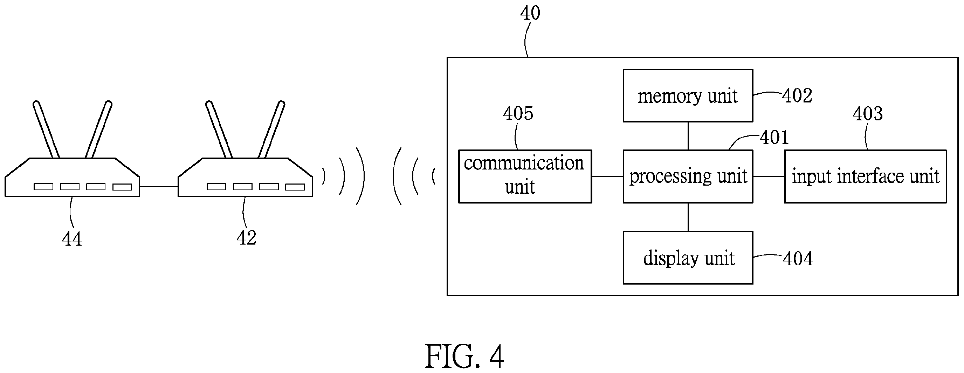

Next, in Fig. 4, a mobile management system in one embodiment of the present invention is disclosed. The system facilitates a user-end mobile device to install a management program that allows the user to operate the management for the LAN by his gesture over a touch-sensitive display.

A mobile device 40 is shown in the diagram. The mobile device 40 essentially includes a processing unit 401, a memory unit 402, an input interface unit 403, a display unit 404, and a communication unit 405. The mobile device 40 firstly establishes a connection with one access point 42 within the LAN. Through this connected access point 42, the mobile device 40 receives network information related to the master access point 44, for example the IP address of the master access point 44 of the LAN. It is noted that the access point 42 connected with the mobile device 40 can be the master access point itself.

In the present embodiment, the mobile management system covers a LAN including one or more access points, or adding one or more terminal devices, and the mobile device 40 operates the management over the LAN. The memory unit 402 of the mobile device 40 can be various types of the memories/non-volatile memories. The memory unit 402 stores a management program. The processing unit 401 executes the management program and a graphical management interface is initiated and displayed on the display unit 404 of the mobile device 40. The program then activates the communication unit 405 to operate a communication protocol, e.g. WiFi™, for connecting to the access point 42. The management program then acquires information relating to the master access point 44 from the connected access point 42. After that, the management program also acquires connectivity among access points and/or the terminal devices from the master access point 44. Further, the program can render a network topology with respect to this LAN, and show the topology with a graphical topology map.

The input interface unit 403 of the mobile device 40 is configured to initiate a user interface for generating a user instruction by a gesture. The input interface unit 403 is such as a touch-sensitive panel composed of a touch panel and the display unit 404, by which the user is able to operate the management interface by his gesture. Through this management interface, the user can issue instructions for operating an individual access point, multiple access points, or add/delete any node in the LAN.

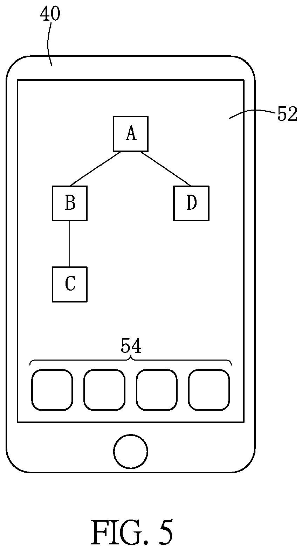

Reference is made to Fig. 5 showing a schematic diagram depicting a user interface initiated by a mobile device.

The management program initiates a graphical management interface displayed on the touch-sensitive panel of the mobile device 40. The graphical management interface is such as a graphical user interface 52. The management program drives its connection module to activate the communication unit of the mobile device to establish a connection with a specific access point, and also drive a security certification module to gain a privilege to access the LAN. Therefore, the management program is authorized to access the LAN so as to perform a security certification and acquire network information, e.g. an IP address, of the master access point.

Next, the management program has a data retrieving module that is driven to connect with the master access point and acquire requisite information regarding the network topology, including the network addresses, hostnames, SSIDs, and/or MAC addresses of the nodes A, B, C and D. The management program may also obtain the service content, such as service signal band and communication port. The management program accordingly computes the number, distances, and locations of the nodes A, B, C and D according to their information, so as to obtain connectivity of the access points and/or terminal devices within the LAN. The connectivity is provided to render the network topology including the number, locations, and types of the nodes. The management program therefore visualizes the network topology using a graphical module. In an exemplary example, the program compares the database to retrieve a topology pattern with respect to the current network topology. A graphical network topology is created and displayed on a graphical user interface 52.

The graphical user interface 52 provides a control button 54 which allows the user to touch to generate instructions. The input interface unit is a touch-sensitive panel used to generate touch signals by a gesture; and the management program converts the series of touch signals to a series of instructions that are transmitted to the one or more access points via the communication unit. The functions made by the control button 54 are such as instruction of diagnosis, and instruction for changing the access point.

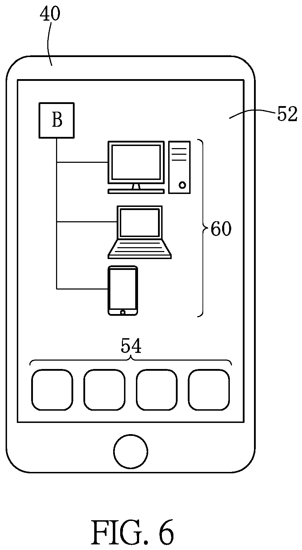

Fig. 6 shows a schematic diagram depicting a graphical user interface 52 of the mobile device 40 in an example. The interface 52 shows the connectivity of the node B, including the terminal device 60 connected with the node B. The diagram is created by the management program when it gains the connectivity information from the master access point. The management program allows the user to acknowledge the operating status of the node B through the graphical interface.

The operating status of any node is such as throughput, bit error rate, number of connectivity, or even the electric power and operating temperature. The graphical user interface 52 utilizes text, colors, animation, and/or symbols to indicate the status of the nodes and connections.

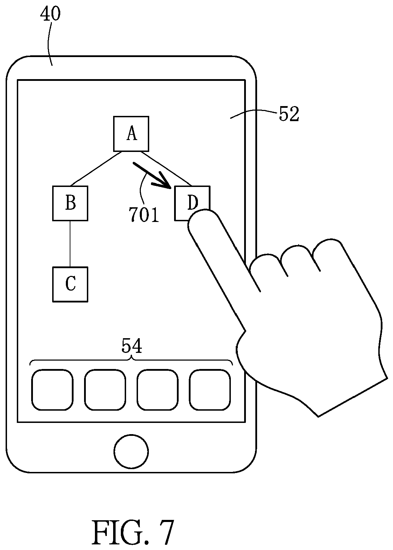

Reference is made to Fig. 7 which shows a schematic diagram depicting a management interface allowing a user to use gestures to conduct mobile management. There are several nodes A, B, C and D shown in the graphical user interface 52. Several control buttons 54 are exemplarily shown in the interface 52.

The user performs an instruction over the graphical user interface 52 by his finger. An arrow between the node A and the node D denotes a gesture instruction 701. For example, the user can slide his finger from a node, e.g. a first access point, to another node, e.g. a second access point, over the graphical user interface 52 when he wants to inspect the connection between the two nodes, e.g. the two access points. The touch signals are instantly generated for rendering a series of instructions. The management program transmits the instructions to the first access point and the second access point respectively. The mobile management method allows the user to inspect the connectivity among the nodes within the LAN.

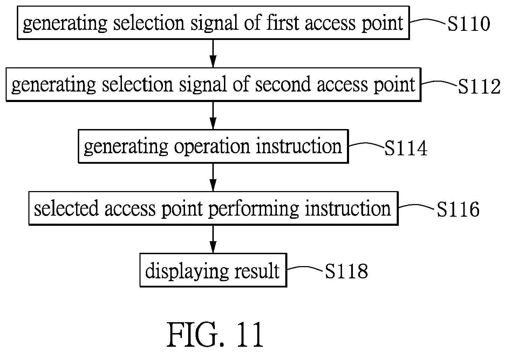

In an exemplary example, in view of the process shown in Fig.11, the management program generates a selection signal of the first access point in response to the touch signals when the user touches over the icon indicative of the first access point with his gesture (step S110). The management program then generates an instruction with respect to the first access point, and transmits the instruction to the first access point. The first access point then performs the received instruction.

The user can use his finger sliding from the first access point to the second access point. Similarly, the second access point also receives a selection signal converted from the touch signals by the management program (step S112), so as to generate an instruction with respect to the second access point. At the same time, the sliding gesture renders an operating instruction (step S 114). The management program generates a series of operating instructions for both the first access point and the second access point in response to the touch signals. The operating instruction is an instruction of connection diagnosis for diagnosing the connection between the first access point and the second access point (step S116). For example, the instruction of connection diagnosis is such as a PING command. The first access point generates a diagnostic packet, e.g. PING packet, transmitted to the second access point and the second access point responds to the PING packet so as to diagnose the connection between the access points. The inspection can be indicated by colors or text for showing the status such as healthy, crowded, or broken (step S118).

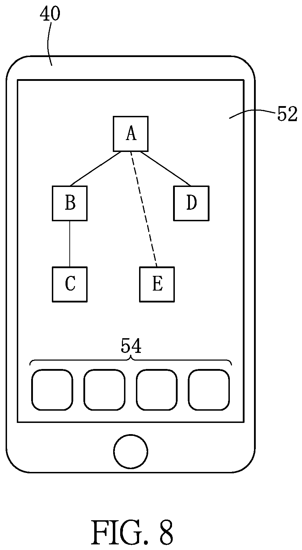

In one further embodiment, reference is made to Fig. 8 schematically showing a management interface. The management interface assists the user in adding a node, e.g. a new access point. As the flow chart shown in Fig. 11, the mobile device 40 initiates the graphical user interface 52 showing the nodes A, B, C and D, and a set of control buttons 54.

The control buttons 54 allow the user to add a node 'E', and accordingly the management program issues an instruction. The new node 'E' is shown in the graphical user interface 52. This node E can be named second access point in the current example. When the node 'E' is added into this network topology, one of the nodes, e.g. the node 'A' named first access point in this example, should be selected to establish the connection there-between. The user can use his finger sliding from the node 'A' to the node 'E' for establishing the connection. The management program converts the sliding touch signals to a selection signal, and an operating instruction. The management program also instructs the access point which serves as the DHCP service to allocate the IP address to the newly-added node 'E', and broadcast the address of the master access point for completing the connection with the node 'E'.

In the current example, the node 'E' acts as a new second access point in the LAN. A first access point should be selected to be the node connected with the node 'E' (step S110). A selection signal with respect to the second access point is created by touching the icon indicative of the second access point (step S112). An operating instruction is the instruction for adding a connection (step S114). The first access point performs the operating instruction for connecting with the second access point (step S116). The successful connection has been done and the result can be shown in the mobile device (step S118).

For example, in addition to the general connections among the nodes, a streamlined secure connection such as Wi-Fi Protected Setup (WPS) can be adopted among the devices with the same brand or the same specification. When the access point enters a WPS mode, the user merely pushes a WPS button to add a new node to the LAN supporting WPS.

In one further embodiment, the management program can also manage any access point removed from the LAN. For example, the second access point is the access point to be deleted from the local area network, and the related operating instruction is the instruction performed by the first access point for deleting/breaking the connection from the second access point.

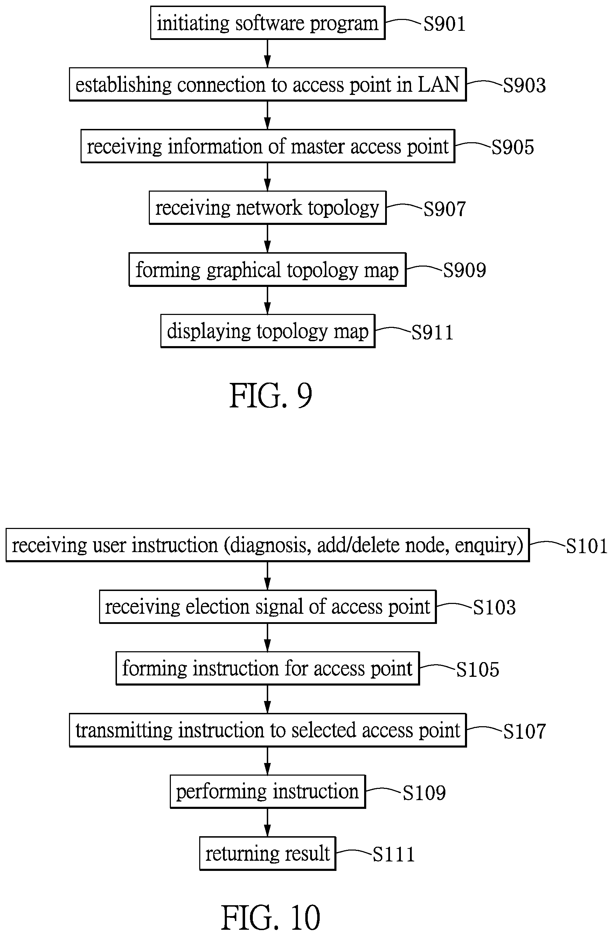

Fig. 9 shows a flow chart describing the mobile management method for the local area network in one embodiment of the present invention.

In the beginning, such as step S901, the mobile device launches a software program that is used to initiate a graphical management interface, and also activate related hardware components such as the communication unit. The communication unit is used to establish a connection with one access point in the LAN, such as step S903. The program acquires information relating to the master access point within the LAN from a connected access point. Since the IP address of the master access point is acknowledged, the program can communicate with the master access point, such as step S905.

The information retrieved from the master access point is such as a list of one or more terminal devices connected to the access point, received signal strength indicator (RSSI) between every access point and its connected terminal device, and/or the connectivity between the access point and the terminal device(s). When the management program receives this information, a topology with respect to the LAN can be obtained, such as step S907.

The management program then determines a type of the network topology based on the connectivity among the nodes of the LAN. The topology can be visualized as a graphical topology map using a graphical module of the program, such as step S909. The topology map schematically shows the network topology of the LAN. The topology map is then displayed using a display of the mobile device, such as step S911.

Fig. 10 shows a flow chart describing a process of the mobile device generating instruction, the access point performing the instruction, and outputting a result according to one embodiment of the present invention.

In step S101, an instruction can be generated through a touch-sensitive panel of a mobile device that is manipulated by a user. A management program executed in the mobile device converts the touch signals to a user instruction. The user instruction is such as the instruction of connection diagnosis, adding/deleting node, or checking a condition. After that, such as step S103, the program receives a selection signal of an access point made by the user. The selection signal forms an instruction specified to the access point, such as step S105.

When the instruction is transmitted to the selected access point, such as step S107, the access point performs the received instruction, such as step S109. A result can be transmitted back to the management program, such as step S111.

In an exemplary example, the user issues a diagnosis instruction through the management program. The diagnosis instruction is transmitted to an access point. The access point performs the instruction, e.g. generates a diagnostic packet, and an outcome is generated and sent back to the management program in the mobile device. The management program assesses a health index according to the outcome. The health index can be presented by text, image, and/or sound. For example, the user issues a checking instruction through the management program. The management program transmits the instruction to a master access point of the LAN. The instruction is to check a connection status or a node status. The master access point transmits a result to the management program that may employ text or an image to show the result.

The disclosure in accordance with the present invention is related to a computer-readable storage device that is used to store a management program. The management program in an early stage is to establish a connection between the user device and an access point. A security certification module is provided to verify a user ID and a privilege. A data retrieving module is provided to acquire data from the access point. A graphical module is used to render the content displayed on a display of the mobile device.

The management program stored in the storage device is executed by a processor so as to implement the mobile management method. An instruction set of the management program includes instruction for activating a communication unit of the mobile device for establishing a connection to an access point; instruction for acquiring information relating to a master access point from the access point; instruction for acquiring connectivity of one or more access points and/or one or more terminal devices from the master access point; instruction for rendering a network topology according to the connectivity; instruction for forming a graphical topology map; and instruction for displaying the topology map.

In one embodiment, the instruction set further includes instruction for generating an instruction for a first access point when the first access point is selected in response to the touch signals; and instruction for transmitting the instruction to the first access point.

The instruction set further includes instruction for forming the instruction with respect to a second access point when the second access point is selected in response to the touch signals; and instruction for generating operating instruction between the first access point and second access point.

Thus, the disclosed mobile management method and system is essentially operated in a mobile device that renders a graphical management interface that operates in coordination with a master access point designated in a LAN. Through the master access point, the mobile device can receive a topology and operating situation of the whole LAN. A graphical topology map, a node relationship diagram, and visual interface with a user's operation using gestures are provided for achieving management of the LAN.

The aforementioned embodiments are meant to be examples useful for understanding the invention. The present invention is only defined by the appended independent claims, and advantageous embodiments of the present invention are described in the dependent claims.

## Claims

1. A mobile management method for managing a local area network, comprising:
while executing a management program in a mobile device (40), activating a communication unit (405) of the mobile device (40) to establish (S903) a connection with an access point (42) in the local area network, wherein at least two access points (42) are within the local area network;
retrieving (S905), by the mobile device, information of a master access point (44) within the local area network from the connected access point (42);
retrieving, by the mobile device, information of connectivity of the at least two access points (42) and/or one or more terminal devices within the local area network from the master access point (44), and obtaining (S907) a network topology;
forming (S909), by the mobile device, a graphical topology map according to the information of connectivity;
displaying (S911), by the mobile device, the graphical topology map on a graphical user interface; and
generating (S101), by the mobile device, based on touch gestures of a user over the graphical user interface, user instructions in order to operate network management within the local area network;
wherein, the master access point (44) of the local area network is decided from the at least two access points (42), and wherein deciding the master access point (44) of the local area network comprises:
within the local area network, every access point (42) confirming that there is one access point configured to allocate IP addresses and said access point is configured to be the master access point (44) of the local area network;
every access point (42) receiving information of an IP address of the master access point (44);
every access point (42) transmitting its operating information to the master access point (44), and the master access point (44) receiving (S311) the operating information and acting as a server used to allocate the IP addresses;
wherein, the management program executed in the mobile device (40) receives the operating information of every access point (42) from the master access point (44).

2. The method as recited in claim 1, wherein the topology map is to show the connectivity of the at least two access points (42) and/or one or more terminal devices within the local area network according to a type of the network topology.

3. The method as recited in claim 2, wherein the type of the network topology is any or a combination of a point-to-point topology, a bus topology, as star topology, a ring topology, a mesh topology, a tree topology, a hybrid topology, a Daisy Chain topology, and a linear topology.

4. The method as recited in claim 1, wherein the input interface unit (403) is a touch-sensitive panel used to generate touch signals by the touch gestures; the management program converts the series of touch signals to a series of instructions that are transmitted to the at least two access points (42) via the communication unit (405).

5. The method as recited in claim 4, wherein, after generating the instructions, comprising:
by the management program, generating a selection signal specified to a first access point in response to the touch signals, and generating an instruction to the first access point;
transmitting the instruction to the first access point, and the instruction being performed by the first access point.

6. The method as recited in claim 5, further comprising:
the management program generating a selection signal specified to a second access point in response to the touch signals, and generating an instruction to the second access point;
the management program generating an operating instruction between the first access point and the second access point in response to the touch signals;
performing the operating instruction by the first access point and the second access point.

7. The method as recited in claim 6, wherein the second access point is a newly-added access point within the local area network, and the operating instruction is the instruction for adding a connection, in which the first access point performs the operating instruction for connecting with the second access point.

8. The method as recited in claim 6, wherein the second access point is the access point deleted from the local area network, and the operating instruction is the instruction performed by the first access point for deleting the connection from the second access point.

9. The method as recited in claim 6, wherein the operating instruction is an instruction of connection diagnosis for diagnosing the connection between the first access point and the second access point; in which the first access point generates a diagnostic packet transmitted to the second access point so as to diagnose the connection between the first access point and the second access point.

10. The method as recited in claim 1, wherein, when the topology of the local area network is changed, every access point (42) within the local area network re-confirms an access point served to allocate IP addresses, so as to re-configure the master access point (44), and the re-configured master access point (44) again receives operating information of every access point (42), and renders an updated network topology to the management program.

11. The method as recited in claim 10, wherein the master access point (44) receives a list including one or more connected terminal devices from every access point (42), RSSI between every access point (42) and its connected terminal device, and network status of every access point (42), and provides the management program.

12. A mobile management system for a local area network (10), comprising:
a local area network (10) including at least two access points (42) and/or one or more terminal devices, in which a master access point (44) is defined;
a mobile device (40) including a processor and a memory used to store a management program, wherein the management program executed by the processor is to perform:
activating a communication unit (405) of the mobile device (40), and establishing (S903) a connection with an access point (42) within the local area network having the at least two access points (42);
retrieving (S905) information of the master access point (44) within the local area network from one connected access point (42);
retrieving information of connectivity of at least two access points (42) and/or one or more terminal devices within the local area network from the master access point (44), and obtaining (S907) a network topology of the local area network;
forming (S909) a graphical topology map according to the information of connectivity;
displaying (S911) the graphical topology map on a graphical user interface; and
generating (S101), by the mobile device, based on touch gestures of a user over the graphical user interface, user instructions in order to operate network management within the local area network;
wherein, the master access point (44) of the local area network is decided from the at least two access points (42), wherein deciding the master access point (44) of the local area network comprises:
within the local area network, every access point (42) is configured to confirm that there is one access point configured to allocate IP addresses and said access point is configured to be the master access point (44) of the local area network;
every access point (42) is configured to transmit its operating information to the master access point (44), and the master access point (44) is configured to receive (S311) the operating information and to act as a server used to allocate the IP addresses;
wherein, the management program executed in the mobile device (40) is configured to receive the operating information of every access point (42) from the master access point (44).

13. The system as recited in claim 12, wherein the mobile device (40) has a touch-sensitive panel used to generate touch signals by the touch gestures; the management program converts the series of touch signals to a series of instructions that are transmitted to the at least two access points (42) via the communication unit (405).

## Patentansprüche

1. Mobilverwaltungsverfahren zum Verwalten eines lokalen Netzwerks, aufweisend:
während des Ausführens eines Verwaltungsprogramms in einer Mobilvorrichtung (40) Aktivieren einer Kommunikationseinheit (405) der Mobilvorrichtung (40), um eine Verbindung mit einem Zugangspunkt (42) in dem lokalen Netzwerk aufzubauen (S903), wobei mindestens zwei Zugangspunkte (42) innerhalb des lokalen Netzwerks liegen,
Abrufen (S905) von Informationen eines Master-Zugangspunktes (44) innerhalb des lokalen Netzwerks von dem verbundenen Zugangspunkt (42) durch die Mobilvorrichtung,
Abrufen von Konnektivitätsinformationen der mindestens zwei Zugangspunkte (42) und/oder eines oder mehrerer Endgeräte innerhalb des lokalen Netzwerks von dem Master-Zugangspunkt (44) durch die Mobilvorrichtung und Erhalten (S907) einer Netzwerktopologie,
Bilden (S909) einer grafischen Topologiekarte durch die Mobilvorrichtung gemäß den Konnektivitätsinformationen,
Anzeigen (S911) der grafischen Topologiekarte auf einer grafischen Benutzerschnittstelle durch die Mobilvorrichtung und
Erzeugen (S101) von Benutzerbefehlen durch die Mobilvorrichtung auf der Grundlage von Berührungsgesten eines Benutzers über der grafischen Benutzerschnittstelle, um das Netzwerkmanagement innerhalb des lokalen Netzwerks zu betreiben,
wobei der Master-Zugangspunkt (44) des lokalen Netzwerks von den mindestens zwei Zugangspunkten (42) aus entschieden wird und wobei das Entscheiden des Master-Zugangspunkts (44) des lokalen Netzwerks aufweist:
innerhalb des lokalen Netzwerks Bestätigen, durch jeden Zugangspunkt (42), dass es einen Zugangspunkt gibt, der konfiguriert ist, um IP-Adressen zuzuweisen, und der Zugangspunkt konfiguriert ist, um der Master-Zugangspunkt (44) des lokalen Netzwerks zu sein,
Empfangen, durch jeden Zugangspunkt (42), von Informationen über eine IP-Adresse des Master-Zugangspunktes (44),
Übermitteln, durch jeden Zugangspunkt (42), seiner Betriebsinformationen an den Master-Zugangspunkt (44) und Empfangen (S311), durch den Master-Zugangspunkt (44), der Betriebsinformationen und Fungieren als ein Server, der zum Zuweisen der IP-Adressen verwendet wird,
wobei das in der Mobilvorrichtung (40) ausgeführte Verwaltungsprogramm die Betriebsinformationen jedes Zugangspunktes (42) von dem Master-Zugangspunkt (44) empfängt.

2. Verfahren gemäß Anspruch 1, wobei die Topologiekarte die Konnektivität der mindestens zwei Zugangspunkte (42) und/oder eines oder mehrerer Endgeräte innerhalb des lokalen Netzwerks gemäß einem Typ der Netzwerktopologie zeigen soll.

3. Verfahren gemäß Anspruch 2, wobei der Typ der Netzwerktopologie irgendeine oder eine Kombination einer Punkt-zu-Punkt-Topologie, einer Bustopologie, als Sterntopologie, einer Ringtopologie, einer Maschentopologie, einer Baumtopologie, einer Hybridtopologie, einer Daisy-Chain-Topologie und einer linearen Topologie ist.

4. Verfahren gemäß Anspruch 1, wobei die Eingabeschnittstelleneinheit (403) ein berührungsempfindliches Panel ist, das zum Erzeugen von Berührungssignalen durch die Berührungsgesten verwendet wird, das Verwaltungsprogramm die Reihe von Berührungssignalen in eine Reihe von Befehlen umwandelt, die über die Kommunikationseinheit (405) an die mindestens zwei Zugangspunkte (42) übertragen werden.

5. Verfahren gemäß Anspruch 4, wobei dieses nach dem Erzeugen der Befehle aufweist:
Erzeugen, durch das Verwaltungsprogramm, eines Auswahlsignals, das für einen ersten Zugangspunkt spezifiziert ist, in Antwort auf die Berührungssignale, und Erzeugen eines Befehls für den ersten Zugangspunkt,
Übermitteln des Befehls an den ersten Zugangspunkt, und wobei der Befehl durch den ersten Zugangspunkt ausgeführt wird.

6. Verfahren gemäß Anspruch 5, ferner aufweisend:
Erzeugen, durch das Verwaltungsprogramm, eines Auswahlsignals, das für einen zweiten Zugangspunkt spezifiziert ist, in Antwort auf die Berührungssignale, und Erzeugen eines Befehls für den zweiten Zugangspunkt,
Erzeugen, durch das Verwaltungsprogramm, eines Betriebsbefehls zwischen dem ersten Zugangspunkt und dem zweiten Zugangspunkt in Antwort auf die Berührungssignale,
Ausführen des Betriebsbefehls durch den ersten Zugangspunkt und den zweiten Zugangspunkt.

7. Verfahren gemäß Anspruch 6, wobei der zweite Zugangspunkt ein neu hinzugefügter Zugangspunkt innerhalb des lokalen Netzwerks ist und der Betriebsbefehl der Befehl zum Hinzufügen einer Verbindung ist, bei der der erste Zugangspunkt den Betriebsbefehl zum Verbinden mit dem zweiten Zugangspunkt ausführt.

8. Verfahren gemäß Anspruch 6, wobei der zweite Zugangspunkt der aus dem lokalen Netzwerk gelöschte Zugangspunkt ist und der Betriebsbefehl der Befehl ist, der durch den ersten Zugangspunkt zum Löschen der Verbindung von dem zweiten Zugangspunkt ausgeführt wird.

9. Verfahren gemäß Anspruch 6, wobei der Betriebsbefehl ein Verbindungsdiagnosebefehl zum Diagnostizieren der Verbindung zwischen dem ersten Zugangspunkt und dem zweiten Zugangspunkt ist, wobei der erste Zugangspunkt ein Diagnosepaket erzeugt, das an den zweiten Zugangspunkt übermittelt wird, um die Verbindung zwischen dem ersten Zugangspunkt und dem zweiten Zugangspunkt zu diagnostizieren.

10. Verfahren gemäß Anspruch 1, wobei, wenn die Topologie des lokalen Netzwerks geändert wird, jeder Zugangspunkt (42) innerhalb des lokalen Netzwerks einen Zugangspunkt, der zum Zuweisen von IP-Adressen diente, erneut bestätigt, um den Master-Zugangspunkt (44) neu zu konfigurieren, und der neu konfigurierte Master-Zugangspunkt (44) wiederum Betriebsinformationen von jedem Zugangspunkt (42) empfängt und dem Verwaltungsprogramm eine aktualisierte Netzwerktopologie liefert.

11. Verfahren gemäß Anspruch 10, wobei der Master-Zugangspunkt (44) eine Liste empfängt, die ein oder mehrere verbundene Endgeräte von jedem Zugangspunkt (42), RSSI zwischen jedem Zugangspunkt (42) und seinem verbundenen Endgerät und den Netzwerkstatus von jedem Zugangspunkt (42) enthält, und das Verwaltungsprogramm bereitstellt.

12. Mobilverwaltungssystem für ein lokales Netzwerk (10), aufweisend:
ein lokales Netzwerk (10), das mindestens zwei Zugangspunkte (42) und/oder ein oder mehrere Endgeräte aufweist, in dem ein Master-Zugangspunkt (44) definiert ist,
eine Mobilvorrichtung (40), aufweisend einen Prozessor und einen Speicher, der zum Speichern eines Verwaltungsprogramms verwendet wird, wobei das von dem Prozessor ausgeführte Verwaltungsprogramm folgendes ausführen soll:
Aktivieren einer Kommunikationseinheit (405) der Mobilvorrichtung (40) und Herstellen (S903) einer Verbindung mit einem Zugangspunkt (42) innerhalb des lokalen Netzwerks, das die mindestens zwei Zugangspunkte (42) aufweist,
Abrufen (S905) von Informationen des Master-Zugangspunktes (44) innerhalb des lokalen Netzwerks von einem verbundenen Zugangspunkt (42),
Abrufen von Konnektivitätsinformationen von mindestens zwei Zugangspunkten (42) und/oder einem oder mehreren Endgeräten innerhalb des lokalen Netzwerks von dem Master-Zugangspunkt (44), und Erhalten (S907) einer Netzwerktopologie des lokalen Netzwerks,
Bilden (S909) einer grafischen Topologiekarte gemäß den Konnektivitätsinformationen,
Anzeigen (S911) der grafischen Topologiekarte auf einer grafischen Benutzerschnittstelle und
Erzeugen (S101), durch die Mobilvorrichtung, von Benutzerbefehlen auf der Grundlage von Berührungsgesten eines Benutzers über der grafischen Benutzerschnittstelle, um Netzwerkverwaltung innerhalb des lokalen Netzwerks zu betreiben,
wobei der Master-Zugangspunkt (44) des lokalen Netzwerks von den mindestens zwei Zugangspunkten (42) entschieden wird, wobei das Entscheiden des Master-Zugangspunkts (44) des lokalen Netzwerks aufweist:
innerhalb des lokalen Netzwerks ist jeder Zugangspunkt (42) konfiguriert, um zu bestätigen, dass es einen Zugangspunkt gibt, der konfiguriert ist, um IP-Adressen zuzuweisen, und ist der Zugangspunkt konfiguriert, um der Master-Zugangspunkt (44) des lokalen Netzwerks zu sein,
jeder Zugangspunkt (42) ist konfiguriert, um seine Betriebsinformationen an den Master-Zugangspunkt (44) zu übermitteln, und der Master-Zugangspunkt (44) ist konfiguriert, um die Betriebsinformationen zu empfangen (S311) und als ein Server zu fungieren, der zum Zuweisen der IP-Adressen verwendet wird,
wobei das in der Mobilvorrichtung (40) ausgeführte Verwaltungsprogramm konfiguriert ist, um die Betriebsinformationen jedes Zugangspunktes (42) von dem Master-Zugangspunkt (44) zu empfangen (S311).

13. System gemäß Anspruch 12, wobei die Mobilvorrichtung (40) ein berührungsempfindliches Panel aufweist, das zum Erzeugen von Berührungssignalen durch die Berührungsgesten verwendet wird, wobei das Verwaltungsprogramm die Reihe von Berührungssignalen in eine Reihe von Befehlen umwandelt, die über die Kommunikationseinheit (405) an die mindestens zwei Zugangspunkte (42) übermittelt werden.

## Revendications

1. Procédé de gestion mobile destiné à gérer un réseau local, comprenant les étapes suivantes :
tout en exécutant un programme de gestion dans un dispositif mobile (40), activer une unité de communication (405) du dispositif mobile (40) afin d'établir (S903) une connexion avec un point d'accès (42) dans le réseau local, où deux points d'accès (42) au moins se situent dans le réseau local ;
récupérer (S905), avec le dispositif mobile, des informations concernant un point d'accès maître (44) dans le réseau local à partir du point d'accès connecté (42) ;
récupérer, avec le dispositif mobile, des informations concernant la connectivité des deux points d'accès (42) au moins, et / ou d'un ou de plusieurs dispositifs terminaux dans le réseau local à partir du point d'accès maître (44), et obtenir (S907) une topologie de réseau ;
former (S909), avec le dispositif mobile, une carte de topologie graphique selon les informations de connectivité ;
afficher (S911), avec le dispositif mobile, la carte de topologie graphique sur une interface utilisateur graphique ; et
générer (S101), avec le dispositif mobile, sur la base de commandes tactiles d'un utilisateur sur l'interface utilisateur graphique, des instructions d'utilisateur visant à procéder à la gestion de réseau dans le réseau local ;
où, le point d'accès maître (44) du réseau local est décidé à partir des deux points d'accès (42) au moins, et où l'étape consistant à décider le point d'accès maître (44) du réseau local comprend les étapes suivantes :
dans le réseau local, chaque point d'accès (42) confirme qu'il y a un point d'accès configuré pour attribuer des adresses IP, et ledit point d'accès est configuré pour être le point d'accès maître (44) du réseau local ;
chaque point d'accès (42) reçoit des informations d'une adresse IP du point d'accès maître (44) ;
chaque point d'accès (42) transmet ses informations opérationnelle au point d'accès maître (44), et le point d'accès maître (44) reçoit (S311) les informations opérationnelle et agit en tant que serveur utilisé pour attribuer les adresses IP ;
où, le programme de gestion exécuté dans le dispositif mobile (40) reçoit les informations opérationnelle de chaque point d'accès (42) à partir du point d'accès maître (44).

2. Procédé selon la revendication 1, où la carte de topologie sert à afficher la connectivité des deux points d'accès (42) au moins et / ou d'un ou de plusieurs dispositifs terminaux dans le réseau local selon le type de la topologie de réseau.

3. Procédé selon la revendication 2, où le type de la topologie de réseau est l'une quelconque d'une topologie point à point, d'une topologie de bus, d'une topologie en étoile, d'une topologie en anneau, d'une topologie maillée, d'une topologie en arbre, d'une topologie hybride, d'une topologie en guirlande, et d'une topologie linéaire, voire une association de celles-ci.

4. Procédé selon la revendication 1, où l'unité d'interface d'entrée (403) est un panneau tactile utilisé pour générer des signaux de contact provenant des commandes tactiles ; le programme de gestion convertit la série de signaux de contact en une série d'instructions qui sont transmises aux deux points d'accès (42) au moins par l'intermédiaire de l'unité de communication (405).

5. Procédé selon la revendication 4, lequel, après la génération des instructions, comprend les étapes suivantes :
avec le programme de gestion, générer un signal de sélection spécifié à un premier point d'accès en réponse aux signaux de contact, et générer une instruction pour le premier point d'accès ;
transmettre l'instruction au premier point d'accès, l'instruction étant exécutée par le premier point d'accès.

6. Procédé selon la revendication 5, comprenant en outre les étapes suivantes :
le programme de gestion génère un signal de sélection spécifié à un second point d'accès en réponse aux signaux de contact, et génère une instruction pour le second point d'accès ;
le programme de gestion génère une instruction opérationnelle entre le premier point d'accès et le second point d'accès en réponse aux signaux de contact ;
faire exécuter l'instruction opérationnelle par le premier point d'accès et par le second point d'accès.

7. Procédé selon la revendication 6, où le second point d'accès est un point d'accès nouvellement ajouté dans le réseau local, et l'instruction opérationnelle est l'instruction visant à ajouter une connexion, dans laquelle le premier point d'accès exécute l'instruction opérationnelle pour se connecter au second point d'accès.

8. Procédé selon la revendication 6, où le second point d'accès est le point d'accès supprimé du réseau local, et l'instruction opérationnelle est l'instruction exécutée par le premier point d'accès pour supprimer la connexion à partir du second point d'accès.

9. Procédé selon la revendication 6, où l'instruction opérationnelle est une instruction de diagnostic de connexion visant à diagnostiquer la connexion entre le premier point d'accès et le second point d'accès ; dans lequel le premier point d'accès génère un paquet de diagnostic transmis au second point d'accès afin de diagnostiquer la connexion entre le premier point d'accès et le second point d'accès.

10. Procédé selon la revendication 1, où, lorsque la topologie du réseau local est modifiée, chaque point d'accès (42) du réseau local confirme de nouveau un point d'accès qui a servi à attribuer des adresses IP, afin de reconfigurer le point d'accès maître (44), et le point d'accès maître reconfiguré (44) reçoit de nouveau les informations opérationnelles de chaque point d'accès (42), et fournit une topologie de réseau mise à jour au programme de gestion.

11. Procédé selon la revendication 10, où le point d'accès maître (44) reçoit une liste qui comprend un ou plusieurs dispositifs terminaux connectés à partir de chaque point d'accès (42), le RSSI entre chaque point d'accès (42) et son terminal connecté, et l'état du réseau de chaque point d'accès (42), et fournit le programme de gestion.

12. Système de gestion mobile d'un réseau local (10), comprenant :
un réseau local (10) qui comprend deux points d'accès (42) au moins et / ou un ou plusieurs dispositifs terminaux, dans lequel un point d'accès maître (44) est défini ;
un dispositif mobile (40) qui comprend un processeur et une mémoire utilisée pour stocker un programme de gestion, où le programme de gestion exécuté par le processeur est destiné à exécuter les étapes suivantes :
activer une unité de communication (405) du dispositif mobile (40), et établir (S903) une connexion avec un point d'accès (42) dans le réseau local qui présente les deux points d'accès (42) au moins ;
récupérer (S905) des informations qui concernent le point d'accès maître (44) dans le réseau local à partir d'un point d'accès connecté (42) ;
récupérer des informations qui concernent la connectivité des deux points d'accès (42) au moins, et / ou d'un ou de plusieurs terminaux dans le réseau local à partir du point d'accès maître (44), et obtenir (S907) une topologie de réseau du réseau local ;
former (S909) une carte de topologie graphique selon les informations de connectivité ;
afficher (S911) la carte de topologie graphique sur une interface utilisateur graphique ; et
générer (S101), avec le dispositif mobile, sur la base de commandes tactiles d'un utilisateur sur l'interface utilisateur graphique, des instructions d'utilisateur visant à actionner la gestion de réseau dans le réseau local ;
où, le point d'accès maître (44) du réseau local est décidé à partir des deux points d'accès (42) au moins, où l'étape consistant à décider le point d'accès maître (44) du réseau local comprend les étapes suivantes :
dans le réseau local, chaque point d'accès (42) est configuré pour confirmer qu'il y a un point d'accès configuré pour attribuer des adresses IP, et ledit point d'accès est configuré pour être le point d'accès maître (44) du réseau local ;
chaque point d'accès (42) est configuré pour transmettre ses informations opérationnelles au point d'accès maître (44), et le point d'accès maître (44) est configuré pour recevoir (S311) les informations opérationnelles et pour agir en tant que serveur utilisé pour attribuer les adresses IP ;
où, le programme de gestion exécuté dans le dispositif mobile (40) est configuré pour recevoir les informations opérationnelles de chaque point d'accès (42) à partir du point d'accès maître (44).

13. Système selon la revendication 12, où le dispositif mobile (40) est un panneau tactile utilisé pour générer des signaux de contact provenant des commandes tactiles ; le programme de gestion convertit la série de signaux de contact en une série d'instructions qui sont transmises aux deux points d'accès (42) au moins par l'intermédiaire de l'unité de communication (405).
